# EUROPÄISCHE PATENTSCHRIFT

(11) **EP 2 633 767 B1**
(45) Veröffentlichungstag und Bekanntmachung des Hinweises auf die Patenterteilung: **21.10.2015**
(21) Anmeldenummer: 13168864.0
(22) Anmeldetag: 27.01.2011
(51) Int. Cl.: A23L 3/32, A23L 2/50, A23L 3/26

(54) **Vorrichtung und Verfahren zur Hochspannungsimpulsbehandlung im Ringspalt**
Device and method for treating high-voltage pulses in the annular clearance
Dispositif et procédé de traitement par impulsions haute tension dans la fente annulaire

(30) Priorität: 27.01.2010 DE 102010001279
(43) Veröffentlichungstag der Anmeldung: 04.09.2013
(62) Teilanmeldung aus: 11702596.5
(73) Patentinhaber: Deutsches Institut für Lebensmitteltechnik e.V., 49610 Quakenbrück (DE)
(72) Erfinder: Große Kohorst, Werner, 49413 Dinklage (DE); Rohe, Thomas, 49632 Essen i.O. (DE)
(74) Vertreter: Taruttis, Stefan Georg

(56) Entgegenhaltungen:
- EP-A1- 2 052 743
- EP-A2- 1 198 997
- WO-A1-97/04858
- DE-A1-102007 039 115
- US-A- 5 690 978
- US-A1- 2004 238 348

## Beschreibung

Die Erfindung betrifft Vorrichtung und Verfahren zur Behandlung von flüssigen bzw. pumpbaren Medien, insbesondere von Flüssigkeiten mit einem gepulsten elektrischen Feld, insbesondere zur kontinuierlichen Behandlung von Flüssigkeiten, die vorzugsweise Nahrungsmittel sind. Pumpbare Medien, die mit dem erfindungsgemäßen Verfahren behandelt werden können, können stückige Bestandteile aufweisen, da diese mit dem Verfahren ebenfalls aufgeschlossen werden, bzw. deren Keimgehalt ebenfalls reduziert wird. Das gepulste elektrische Feld wird zwischen Elektroden erzeugt, entlang derer die Flüssigkeit geführt wird, sodass bei Strömung der Flüssigkeit durch das elektrische Feld eine kontinuierliche Behandlung erreicht wird.

Neben der Vorrichtung mit einer Elektrodenanordnung stellt die Erfindung die Verwendung der Vorrichtung als Einrichtung zur Hochspannungsimpulsbehandlung von pumpbaren Medien bereit, sowie ein Verfahren zur Hochspannungsimpulsbehandlung von pumpbaren Medien mittels der Vorrichtung, deren Elektroden an die Hochspannungsimpulsquelle angeschlossen sind, insbesondere zur Hochspannungsimpulsbehandlung von Nahrungsmitteln. Die erfindungsgemäße Vorrichtung und das erfindungsgemäße Verfahren eignen sich insbesondere zum Aufbringen starker elektrischer Felder bei kurzer Dauer, beispielsweise durch Beaufschlagung der Elektroden in der Vorrichtung mit Impulsleistungen von ca. 3-10 MW, insbesondere 5 MW, bei einer Impulsdauer von 10-30 µs, insbesondere 20 µs, bei einer Zeit von 3.000-5.000 µs zwischen den Impulsen, insbesondere mit einen Impulsabstand von ca. 4.000 µs, bzw. bei einer mittleren Leistung von ca. 15-50 kW, insbesondere ca. 25 kW.

Die Hochspannungsimpulsbehandlung, auch Elektroporation genannt, findet unter anderem Verwendung zur Entkeimung und/oder zum Zellaufschluss bei Lebensmitteln, Medikamenten, Abwässern, Substraten und Futtermitteln, da diese Behandlung bei biologischen Zellen zur Perforation der Zellwand führt, und daher zumindest zum teilweisen Aufschluss und/oder zur Verringerung der Keimbelastung bzw. zur Entkeimung. Die besondere Elektrodengestalt der erfindungsgemäßen Vorrichtung erlaubt wegen der Gleichmäßigkeit des erzeugten elektrischen Feldes ein gleichmäßiges Behandlungsverfahren und bevorzugt ein Verfahren mit geringem Energieaufwand für das elektrische Feld, insbesondere im Vergleich zu bekannten Elektrodenanordnungen. Für den Aufschluss bzw. die Entkeimung von pumpbaren Lebensmitteln sind z.B. Feldstärken von 15-20 kV/cm geeignet.

### Stand der Technik

Die DE 60933273 T2 zeigt eine Vorrichtung zu Hochspannungsimpulsbehandlung, bei der eine erste rohrförmige Elektrode um eine beabstandete koaxiale zweite Elektrode angeordnet ist, sodass die Elektroden zwischen sich einen Strömungskanal mit ringförmigem Querschnitt bilden.

Die EP 1123662 B1 beschreibt eine Vorrichtung zu Hochspannungsimpulsbehandlung, bei der die Elektroden in einer Behandlungskammer so angeordnet sein sollen, dass die Feldlinien des erzeugten elektrischen Feldes parallel zueinander verlaufen und die Potenzialsteuerung so konzipiert sein soll, dass Stärke und Richtung des elektrischen Feldes in der effektiven Strömungsfläche konstant sind. Die Behandlungskammer kann ein rechteckiges Gehäuse sein, in dem die Elektroden in einem Abstand zueinander parallel angeordnet sind. Alternativ können die Elektroden in der Innenwand eines Rohrs parallel zur Längsachse eingelassen sein.

Die EP 2052743 A1 beschreibt eine Elektrodenanordnung zur Erzeugung eines elektrischen Felds in einem durchströmbaren Rohrabschnitt, wobei jeweils zwei Abschnitte jeder Elektrode zwischen sich Kondensatoren bilden. Die Elektroden sind in einem axialen Rohrabschnitt angebracht, in dem ein Isolierkörper angeordnet ist, der den Querschnitt zu einem ringförmigen Querschnitt begrenzt. Die Elektroden können in einem axialen Abstand auf dem Isolierkörper, in der Rohrwandung oder einander gegenüberliegend in dem Isolierkörper und der Rohrwandung angeordnet sein.

Die US 5690978 beschreibt eine Vorrichtung zur Behandlung von Flüssigkeiten mit gepulsten elektrischen Feldern, die zwei durch Isolatoren beabstandete Elektroden aufweist, die in einem axialen Abschnitt eines Strömungswegs jeweils einen ringförmigen Querschnitt aufspannen, dessen innere und äußere Oberfläche von derselben Elektrode gebildet wird.

Die US 2004/0238348 A1 beschreibt einen in einem Rohrabschnitt gehalterten Körper aus Isoliermaterial, auf dem eine Elektrodenfläche angeordnet ist, während die andere Elektrodenfläche auf der umgebenden Wandung angeordnet ist, um einen ringförmigen Strömungsquerschnitt zu begrenzen. Alternativ können entgegengesetzt polarisierte Elektroden axial beabstandet auf dem Isolierkörper oder an der Wandung des Rohrs jeweils angrenzend an dem ringförmigen Strömungsquerschnitt angeordnet sein.

Die EP 1198997 A2 beschreibt eine Vorrichtung zur Behandlung einer Flüssigkeit mittels elektrischer Felder, die axial durch Isoliermaterial beabstandete Elektroden aufweist, die die Wandung eines Strömungskanals begrenzen, in welchem eine Gegenelektrode axial verschieblich geführt ist.

Bei der koaxialen Anordnung von Elektroden entgegengesetzter Polarität ist das erzeugte elektrische Feld nicht homogen, sodass Bereiche des ringförmigen Zwischenraums zwischen Elektroden nur von einer signifikant verringerten Feldstärke erfasst werden.

Bei kolinearer Anordnung der Elektroden, z.B. wenn beabstandete Abschnitte eines Rohrs als Elektroden ausgestaltet sind und dazwischen ein Isoliermaterial die Rohrwandung bildet, nimmt die elektrische Feldstärke von der Wandung zum Zentrum des Strömungsquerschnitts deutlich ab. Da überdies die Strömungsgeschwindigkeit mit zunehmendem Abstand von der Rohrwandung größer wird, erfolgt insbesondere entlang der Längsmittelachse einer solchen Elektrodenanordnung keine effektive Behandlung des Mediums, während im Bereich der Wandung durch die hohen Feldstärken hohe thermische Belastungen des dort mit geringer Geschwindigkeit strömenden Mediums auftreten. Diese thermische Belastung kann zur Denaturierung bzw. Anhaftung des pumpbaren Mediums im Bereich der Elektrodenanordnung führen.

### Aufgabe der Erfindung

Es ist Aufgabe der Erfindung, eine alternative Vorrichtung und ein mit der Vorrichtung durchführbares alternatives Verfahren zur Hochspannungsimpulsbehandlung bereitzustellen. Die erfindungsgemäße Vorrichtung und das erfindungsgemäße Verfahren sollen insbesondere die Nachteile des Standes der Technik überwinden.

### Allgemeine Beschreibung der Erfindung

Die Erfindung löst die Aufgabe mit den Merkmalen der Ansprüche 1 bzw. 9 und stellt eine Vorrichtung mit einer Elektrodenanordnung bereit, bei der eine erste und eine zweite Elektrodenfläche in beabstandeten axialen Wandabschnitten eines Behandlungsraums, bzw. in axial beabstandeten Abschnitten entlang des Behandlungsraums, der den Strömungsweg eines pumpbaren Mediums bildet, angeordnet sind, und zwischen den Elektroden ein Isolator angeordnet ist. Die Elektroden sind mit entgegengesetzten Polen einer Hochspannungsimpulsquelle kontaktierbar bzw. verbunden, bzw. mit elektrischen Hochspannungsimpulsen entgegengesetzter Polarität beaufschlagbar. Der vom pumpbaren Medium durchströmte Behandlungsraum, der auch als Strömungskanal bezeichnet wird, hat einen im Wesentlichen ringförmigen Querschnitt, der in seinem ersten (äußeren) und/oder zweiten (inneren) Radius abschnittsweise von den radial beabstandeten Elektrodenflächen und Isolator begrenzt ist, der in dem parallel zur Längsachse liegenden Bereich angeordnet ist, um den die Elektrodenflächen axial beabstandet sind. Auf diese Weise sind die erste und zweite Elektrodenfläche parallel zur Längsachse des Strömungswegs voneinander durch einen Abstand getrennt, in welchem ein Isolator angeordnet ist, und entsprechend überdecken sich die erste und zweite Elektrodenfläche nicht radial, bzw. nicht parallel zur Längsachse des Strömungswegs bzw. des Behandlungsraums mit ringförmigem Querschnitt. Für die Zwecke der Erfindung werden Elektrodenoberflächen von Elektroden bzw. Isolatoroberflächen auch als Elektrodenflächen bzw. Isolatorflächen bezeichnet. Generell bezieht sich die Beschreibung der erfindungsgemäßen Merkmale sowohl auf die Vorrichtung als auch auf das Verfahren gemäß der Erfindung. Der Querschnitt des Behandlungsraums ist vorzugsweise ein Ringspalt, der insbesondere kreisförmig oder elliptisch sein kann und vorzugsweise über zumindest einen axialen Abschnitt, vorzugsweise in dem axialen Abschnitt, über welchen sich der Isolator zwischen den Elektroden erstreckt, eine konstante bzw. die gleiche Spaltbreite aufweist. Entsprechend können der erste und zweite Radius, die diesen Querschnitt zwischen sich begrenzen, in einem axialen Abschnitt jeweils feste Werte aufweisen und eine kreisförmige Fläche beschreiben, oder jeweils radial unterschiedliche Werte aufweisen und eine elliptische Fläche beschreiben, wobei sich die Werte des ersten und zweiten Radius um den Betrag unterschieden, der die Spaltbreite ist.

Die erfindungsgemäße Vorrichtung zeichnet sich dadurch aus, dass eine erste Elektrodenfläche und eine durch einen zwischenliegenden Isolator davon entlang der Längsachse eines Behandlungsraums beabstandete Elektrodenfläche angrenzend an einen Behandlungsraum für pumpbares Medium angeordnet sind, welcher senkrecht zur Längsachse einen ringförmigen Querschnitt aufweist, bzw. einen Ringspalt bildet. Da Einlass- bzw. Auslassöffnung jeweils an gegenüberliegenden Enden des Behandlungsraums mit ringförmigen Querschnitt angeordnet sind, z.B. angrenzend an ein erstes Ende des stabförmigen Elements bzw. angrenzend an ein entlang der Längsachse gegenüberliegendes zweites Ende des stabförmigen Elements angeordnet ist, wird bei Durchtritt eines pumpbaren Mediums durch den Behandlungsraum mit ringförmigem Querschnitt das pumpbare Medium nacheinander über die Elektrodenflächen gegenüberliegender Polarität geführt, d.h. im Wesentlichen parallel zu dem zwischen den Elektrodenflächen erzeugten elektrischen Feld. Auf diese Weise wird beim erfindungsgemäßen Verfahren mit der Vorrichtung eine gleichmäßige Hochspannungsimpulsbehandlung des pumpbaren Mediums durchgeführt, bei der das pumpbare Medium gleichmäßig dem elektrischen Feld ausgesetzt wird.

Durch den erfindungsgemäß bevorzugt ringförmigen Querschnitt des Behandlungsraums, der in einem Abschnitt der Längsachse durch eine erste und eine von dieser axial beabstandete zweite Elektrodenfläche mit einem zwischenliegenden Isolator begrenzt wird, wird pumpbares Medium mit im Wesentlichen gleicher Strömungsgeschwindigkeit strömen gelassen, wobei durch die erfindungsgemäße Elektrodenanordnung ein im Wesentlichen homogenes elektrisches Feld über diesen ringförmigen Querschnitt erzeugt wird. Insbesondere, wenn die erfindungsgemäße Vorrichtung eine Einlassöffnung und/oder eine Auslassöffnung aufweist, die nur von einem ersten Radius begrenzt ist, wie beispielsweise der vollständige, nicht unterbrochene Querschnitt eines Rohrs, und dieser Querschnitt zumindest im Bereich der ersten und zweiten Elektrodenfläche und des zwischenliegenden Isolators auf einen ringförmigen Querschnitt begrenzt wird, dessen äußerer Radius gleich dem Radius der Einlass- bzw. Auslassöffnung ist und dessen zweiter (kleinerer) Radius den ringförmigen Querschnitt begrenzt, liegt der ringförmige Querschnitt im Bereich der höchsten Feldstärken, die zwischen den beabstandeten Elektrodenflächen erzeugt werden, wobei optional die Strömungsgeschwindigkeit im Bereich des ringförmigen Querschnitts erhöht ist und die Bildung von Ablagerungen vermeidet, und vorzugsweise zu einer turbulenten Strömung im Bereich des ringförmigen Querschnitts führt.

Erfindungsgemäß ist entlang der Längsmittelachse des Strömungswegs ein stabförmiges Element angeordnet und die erste und zweite Elektrodenfläche sind in beabstandeten axialen Abschnitten der Vorrichtung angeordnet, über welche sich das stabförmige Element erstreckt, wobei die erste und zweite Elektrodenfläche in einem axialen Abstand angeordnet sind, der parallel zur Längsmittelachse liegt und der von einem Isolator ausgefüllt ist. Optional können die erste und zweite Elektrodenfläche sowie der diese axial beabstandende Isolator zwischen diesen umfänglich geschlossene Oberflächen umfassen, die den Behandlungsraum mit ringförmigem Querschnitt begrenzen. Diese umfänglich geschlossenen Oberflächen sind bevorzugt in verschiedenen Radien oder in einem gleichen Radius um die Längsmittelachse angeordnet, z.B. im ersten Radius als innere oder im zweiten Radius als äußere Zylindermantelfläche um die Längsmittelachse. Die erste Elektrodenfläche grenzt an einer ersten Kante an den Isolator, der sie von der zweiten Elektrodenfläche beabstandet, und die zweite Elektrodenfläche grenzt an die der ersten Kante des Isolators gegenüberliegende zweite Kante. An der ersten und zweiten Kante zwischen Elektrodenfläche und Isolator kann eine Dichtung angeordnet sein, vorzugsweise stößt die erste Elektrodenfläche an der ersten Kante unmittelbar an den Isolator, und die zweite Elektrodenfläche stößt an der zweiten Kante unmittelbar an den Isolator.

Erste und zweite Elektrodenfläche, die in einem axialen Abstand angeordnet sind, der parallel zur Längsmittelachse liegt bzw. bestimmt ist, und der den Abstand zwischen den Elektrodenflächen ausfüllende Isolator können wahlweise an der Außenwandung des Strömungsbereichs mit ringförmigem Querschnitt angeordnet sein, d.h. im Bereich des ersten (größeren) Radius des ringförmigen Querschnitts und/oder am stabförmigen Element, d.h. im Bereich des zweiten (kleineren) Radius des ringförmigen Querschnitts. Oberflächenabschnitte des Abschnitts der Vorrichtung mit ringförmigem Querschnitt, über welchen sich das stabförmige Element längs der Längsmittelachse erstreckt, die an die Elektrodenflächen angrenzen, sind elektrisch nicht leitend bzw. bestehen aus Isolator.

Generell bevorzugt, insbesondere in einer zweiten und dritten Ausführungsform, weisen die voneinander beabstandeten Elektrodenflächen und der Isolator, der den axialen Abstand der Elektrodenflächen ausfüllt, jeweils dieselben Radien um die Längsmittelachse auf, um im ersten und/oder zweiten Radius eine kontinuierliche Oberfläche oder anteilige Oberfläche zu bilden, die den Behandlungsraum begrenzt. Aneinander angrenzende Flächen von Elektroden und Isolator sind bevorzugt auch jeweils in einem gleichen Radius um die Längsmittelachse angeordnet und umfänglich geschlossen.

Generell bedeutet für die Zwecke der Beschreibung die koaxiale Anordnung von Elektrodenflächen, z.B. von Teilelektrodenflächen gleicher Polarität, dass sich diese bei Projektion senkrecht zur Längsmittelachse zumindest abschnittsweise überdecken, wobei die Elektrodenflächen bzw. Teilelektrodenflächen parallel oder in einem Winkel, z.B. bis 45° oder bis 30° zur Längsmittelachse angeordnet sein können. Vorzugsweise sind die Elektrodenflächen und die diese axial beabstandenden Isolatoren sowie das stabförmige Element zur Längsmittelachse rotationssymmetrisch.

Der Strömungsweg bzw. Behandlungsraum mit ringförmigem Querschnitt kann von einem Rohrabschnitt gebildet werden, der innen den ersten Radius aufweist und von einem in dem Rohrabschnitt angeordneten stabförmigen Element, dessen Mantelfläche im zweiten Radius um die gemeinsame Längsmittelachse angeordnet ist. Vorzugsweise ist das stabförmige Element in jeder Ausführungsform, insbesondere wenn es aus Isolator, z.B. Keramik, besteht, längs der Längsachse von stabförmigem Element bzw. des Rohrabschnitts verschieblich angeordnet, insbesondere in Richtung der Längsachse verschieblich formschlüssig und/oder kraftschlüssig im Isolator fixiert. Der erste und zweite Radius können unabhängig voneinander über die Längsmittelachse konstant sein oder sich verändern; die Radien, in denen die erste und zweite Elektrodenfläche mit dem in einem axialen Abschnitt zwischen diesen und der die Elektrodenflächen entgegengesetzter Polarität beabstandenden Isolator angeordnet sind, können jeweils konstant sein oder über die Länge der Längsmittelachse verschieden sein. Der axiale Abschnitt der Längsmittelachse, über den sich die erste Elektrodenfläche und die axial beabstandete zweite Elektrodenfläche sowie der zwischen diesen liegende Isolator erstrecken, können unabhängig voneinander gleich oder verschieden sein.

Besonders bevorzugt weist die erfindungsgemäße Vorrichtung eine erste Elektrodenfläche und eine durch einen Isolator axial beabstandete zweite Elektrodenfläche auf, wobei die erste und die zweite Elektrodenfläche sich optional senkrecht zur Längsmittelachse erstrecken und jeweils Zylindermantelflächen aufweisen oder daraus bestehen, die in einem Radius um die Längsmittelachse angeordnet sind, wobei das stabförmige Element rotationssymmetrisch um die Längsmittelachse gebildet ist, vorzugsweise mit einer zylindrischen Oberfläche.

Generell können Elektrodenflächen formschlüssig und/oder kraftschlüssig mit angrenzenden Isolatoren verbunden sein. Besonders bevorzugt weisen Elektrodenflächen Metall oder Kohlenstoff, z.B. Graphit auf oder bestehen daraus, vorzugsweise Edelstahl oder Titan. Isolatoren, insbesondere solche, die zwischen ersten und zweiten Elektrodenflächen angeordnet sind, sind vorzugsweise einstückig und bestehen besonders bevorzugt aus Keramik. Wie ein Isolator kann ein isolierender Abschnitt eines stabförmigen Elements, das eine Elektrodenfläche aufweist, bevorzugt aus Keramik bestehen.

Das erfindungsgemäße Verfahren zur Behandlung flüssiger Medien, insbesondere zur Keimreduktion und/oder zum Zellaufschluß, verwendet die erfindungsgemäße Vorrichtung zur Bildung eines Behandlungsraums mit ringförmigem Querschnitt, der sich um eine Längsachse erstreckt, wobei in der ringförmige Querschnitt abschnittweise in seinem ersten (äußeren) und/oder zweiten (inneren) Radius von einer ersten und einer axial beabstandeten zweiten Elektrodenfläche gebildet wird. Im erfindungsgemäßen Verfahren wird Medium durch einen Arbeitsraum strömen gelassen bzw. gepumpt, der einen ringförmigen Querschnitt aufweist, wobei durch Hochspannungsimpulsentladung ein elektrisches Feld zwischen einer ersten und einer zweiten Elektrodenfläche erzeugt wird, die axial voneinander beabstandet sind. In dem axialen Abschnitt, um den die erste und zweite Elektrodenfläche beabstandet sind, ist ein Isolator angeordnet.

In einer ersten Ausführungsform sind die erste und zweite Elektrodenfläche axial voneinander beabstandete Abschnitte eines stabförmigen Elements, das koaxial in einem Rohrabschnitt angeordnet ist, der elektrisch nicht leitend ist und vorzugsweise aus Isolator besteht. Die innere Oberfläche des Rohrabschnitts ist bis auf die Elemente zur Kontaktierung der Elektrodenflächen elektrisch nicht leitend bzw. besteht aus Isolator. Als Elemente für diese elektrische Kontaktierung der Elektrodenflächen weist die Vorrichtung z.B. Wandungen des Rohrabschnitts auf, die elektrische Kontaktflächen in einem Abstand zu Elektrodenflächen aufweisen. Eine elektrische Kontaktfläche zur Kontaktierung einer Elektrodenfläche, die auf dem stabförmigen Element angeordnet ist, kann generell in einem axialen Rohrabschnitt angeordnet sein, der die Elektrodenfläche umfasst, und in einem Abstand zu der Elektrodenfläche, z.B. im ersten Radius, da mittels der Leitfähigkeit des Mediums elektrische Energie zu den Elektrodenflächen geleitet wird. Solche elektrischen Kontaktflächen sind vorzugsweise in dem axialen Abschnitt des Rohrs angeordnet, in dem ein von der Gegenelektrode beabstandeter Bereich der zu kontaktierenden Elektrodenfläche angeordnet ist. Elektrische Kontaktflächen erlauben durch die Beabstandung von zumindest abschnittsweise koaxial angeordneten Elektrodenflächen des stabförmigen Elements eine berührungslose Kontaktierung der Elektrodenflächen. Erfindungsgemäß ist eine der Elektrodenflächen durch eine Leitung kontaktiert, die an einem Rohrabschnitt fixiert ist, wobei diese Leitung der Träger für diese Elektrode, einen daran angrenzenden Isolatorabschnitt und die durch den Isolatorabschnitt beabstandete Elektrodenfläche entgegengesetzter Polarität ist, die mittels einer beabstandeten Kontaktfläche elektrisch durch das Medium kontaktiert ist.

In einer zweiten Ausführungsform, ist die zweite Elektrodenfläche jeweils von einem inneren Oberflächenabschnitt eines Rohrs und einem elektrisch in Kontakt stehenden Oberflächenabschnitt des stabförmigen Elements gebildet. Die Abschnitte der ersten und zweiten Elektrodenfläche sind axial voneinander beabstandet, wobei Isolator den axialen Abstand ausfüllt. Vorzugsweise überdeckt der innere Oberflächenabschnitt des Rohrs, der einen Anteil einer Elektrodenfläche bildet, koaxial vollständig oder zumindest teilweise den Oberflächenabschnitt des stabförmiges Elements, der einen Anteil der Elektrodenfläche derselben Polarität bildet, sodass z.B. eine Elektrodenfläche durch zwei koaxiale Oberflächenabschnitte dieser Elektrode gebildet wird.

Der Abschnitt der ersten Elektrodenfläche, der von inneren Oberfläche eines Rohrs gebildet wird, bzw. mit einem ersten (größeren) Radius den ringförmigen Querschnitt begrenzt, ist durch ein elektrisch leitendes, fixiertes Verbindungsstück mit der anteiligen Elektrodenfläche gleicher Polarität elektrisch verbunden, die auf dem stabförmigen Element gebildet ist, der Abschnitt der zweiten Elektrodenfläche, der von der inneren Oberfläche eines Rohrs gebildet wird, ausschließlich durch die Leitfähigkeit des pumpbaren Mediums.

In der zweiten Ausführungsform ist die erste Elektrodenfläche anteilig durch einen Oberflächenabschnitt z.B. der Innenseite eines Rohrabschnitts gebildet, der in einem ersten Radius die ringförmige Querschnittsfläche des Behandlungsraums begrenzt, und von einem damit mittels eines leitfähigen Verbindungsstücks in elektrischem Kontakt stehenden Oberflächenabschnitt des stabförmigen Elements, während die zweite Elektrodenfläche von einem Oberflächenabschnitt im ersten Radius und einem Oberflächenabschnitt des stabförmigen Elements gebildet wird, die nicht durch ein fixiertes Verbindungsstück elektrisch miteinander verbunden sind. Die Abschnitte der Elektrodenflächen unterschiedlicher Polarität sind axial beabstandet, wobei ein Isolator zwischen diesen angeordnet ist. Vorzugsweise überdecken sich die Abschnitte der Elektrodenflächen gleicher Polarität radial zumindest in einem Bereich bzw. Abschnitt parallel zur Längsmittelachse.

Es hat sich gezeigt, dass Elektrodenflächen einer Polarität, die abschnittsweise im ersten Radius, z.B. auf der inneren Oberfläche und im zweiten Radius, auf einen Rohrabschnitt, z.B. auf dem stabförmigen Element, gebildet sind, bei wässrigen pumpbaren Medien, wie sie z.B. für Lebensmittel üblich sind, auch bei radialem Abstand voneinander durch die Leitfähigkeit des pumpbaren Mediums in ausreichendem elektrischen Kontakt stehen, ohne dass ein fixiertes elektrisch leitendes Verbindungsstück erforderlich ist. So wurde z.B. eine um nur ca. 1 bis 10% reduzierte Leitfähigkeit eines wässrigen Mediums gegenüber einem fixierten leitenden Verbindungsstück gefunden, das jeweils zwischen anteiligen konzentrischen Elektrodenflächen einer gemeinsamen Polarität angeordnet war, die radial beabstandet waren und sich in einem axialen Abschnitt von ca. 50 bis 90% überdecken.

Ein besonderer Vorteil der ersten und der zweiten Ausführungsform liegt darin, dass der Abstand zwischen der ersten und zweiten Elektrodenfläche des stabförmigen Elements, der von einem Isolator überdeckt wird, nicht notwendigerweise fluiddicht ist. Denn das stabförmige Element ist innerhalb eines Rohrs angeordnet und muss daher nicht fluiddicht sein. Entsprechend kann in diesen Ausführungsformen der Erfindung der Anteil der ersten und/oder der zweiten Elektrodenfläche, der am stabförmigen Element angeordnet ist, ohne Dichtung an den Isolator angrenzen, der die erste Elektrodenfläche von einer zweiten Elektrodenfläche axial beabstandet.

In der zweiten Ausführungsform ist die erste und zweite Elektrodenfläche gegenüber den anderen Ausführungsformen vergrößert, wenn sich die Elektrodenflächen über gleich große axiale Abschnitte erstrecken, sodass sich im Verhältnis eine Verminderung der Stromdichte an den Elektroden ergibt. Durch die Verringerung der Stromdichte können sich geringere Temperaturspitzen im behandelten Medium ergeben, was wiederum eine geringere thermische Belastung und/oder ein geringeres Anhaften von Bestandteilen des Mediums ergibt.

In der zweiten Ausführungsform sind die Abschnitte der ersten und zweiten Elektrodenflächen, die im ersten Radius das Arbeitsvolumen mit ringförmigem Querschnitt begrenzen, in einem größeren Abstand zueinander angeordnet, als die Abschnitte der ersten und zweiten Elektrodenfläche, die auf dem stabförmigen Element angeordnet sind und das Arbeitsvolumen im zweiten Radius begrenzen. Auf diese Weise wird das elektrische Feld im Wesentlichen zwischen den Abschnitten der ersten Elektrodenfläche und der zweiten Elektrodenfläche, die sich auf dem stabförmigen Element befinden, erzeugt, wodurch die Temperaturbelastung im Wesentlichen im Bereich des Isolators auftritt, der auf dem stabförmigen Element zwischen den Abschnitten der ersten und zweiten Elektrodenfläche angeordnet ist. Die Einleitung der elektrischen Energie kann in dieser Ausführungsform mit oder ohne fixiertes Verbindungsstück zwischen den Anteilen der ersten Elektrodenfläche bzw. zwischen den Anteilen der zweiten Elektrodenfläche durch die Anteile der ersten bzw. zweiten Elektrodenfläche erfolgen, die im ersten Radius, z.B. im (äußeren) Rohrabschnitt angeordnet sind, die an das Arbeitsvolumen mit ringförmiger Querschnittsfläche angrenzen. Daher wird die mögliche Temperaturbelastung zwischen den Abschnitten der ersten und zweiten Elektrodenfläche, die durch den zwischen diesen im ersten Radius angeordneten Isolator axial beabstandet sind, reduziert. Die geringere Temperaturbelastung, insbesondere an den Grenzen zwischen erster Elektrodenfläche und Isolator, bzw. zwischen Isolator und zweiter Elektrodenfläche im erstem Radius erhöht die Lebensdauer der jeweiligen Dichtung bzw. des Isolators.

Generell kann eine Vorrichtung zwei Elektroden gleicher Polarität aufweisen und in axialem Abstand zwischen diesen eine Elektrode entgegengesetzter Polarität, wobei in jedem Abstand zwischen Elektroden ein Isolator und ein stabförmiges Element angeordnet ist, welches den Querschnitt zu einem ringförmigen Querschnitt begrenzt.

### Genaue Beschreibung der Erfindung

Die Erfindung wird nun genauer anhand von Beispielen mit Bezug auf die schematischen Figur beschrieben, die eine erfindungsgemäße Vorrichtung zeigt.

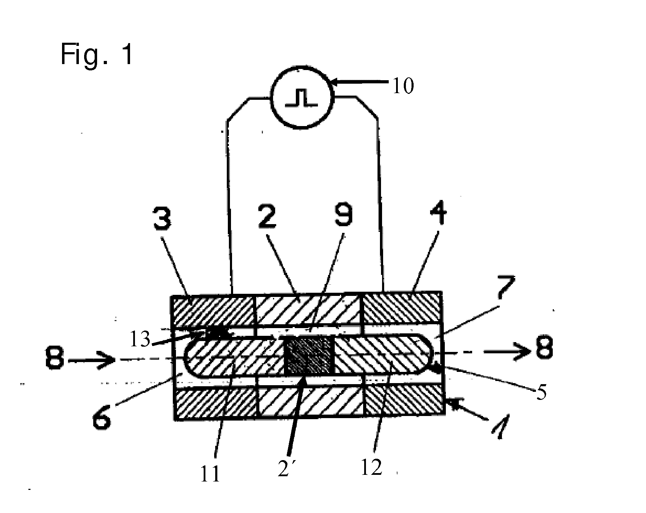

In der Figur bezeichnen gleiche Bezugsziffern funktionsgleiche Elemente. Merkmale, die mit Bezug auf eine Ausführungsform beschrieben sind, können auch auf die anderen Ausführungsformen übertragen werden.

Die in der Figur schematisch gezeigte zweite Ausführungsform ist vorzugsweise in einem den Rohrabschnitt umgebenden isolierenden Mantel angeordnet.

Der Rohrabschnitt 1, dessen Innenradius den ersten Radius aufweist, bildet mit dem koaxial angeordneten stabförmigen Element 5, dessen Außenumfang durch den zweiten Radius begrenzt wird, einen Behandlungsraum mit ringförmigem Querschnitt, der sich über die Länge des stabförmigen Elements 5 erstreckt. Generell bevorzugt erstreckt sich der zweite Radius vorzugsweise zu 50-90% entlang des ersten Radius, vorzugsweise über 60-80% des ersten Radius, die sich um eine gemeinsame Längsmittelachse erstrecken.

In einer nicht erfindungsgemäßen Ausführung ist das stabförmige Element 5 elektrisch nicht leitend und besteht vorzugsweise aus Isolator. Ein axialer Abschnitt des Rohrabschnitts 1 im ersten Umfang besteht aus Isolator 2, der in dem Zwischenraum liegt, um den die erste Elektrodenfläche 3 und die zweite Elektrodenfläche 4 axial beabstandet sind. Alternativ zu dieser Ausführungsform, in der der Isolator 2 und erste und zweite Elektrodenfläche 3, 4 jeweils den selben ersten Radius aufweisen, können diese auch jeweils unterschiedliche erste Radien aufweisen, optional kann das stabförmige Element 5 in axialen Abschnitten, über die sich die erste Elektrodenfläche 3, der Isolator 2 und/oder die zweite Elektrodenfläche 4 erstreckt, axial abschnittsweise unterschiedliche Radien aufweisen. Besonders bevorzugt bilden der erste Radius und der zweite Radius einen ringförmigen Querschnitt, der im Wesentlichen über zumindest 80-90% der Erstreckung des stabförmigen Elements 5 entlang der Längsmittelachse konstant ist.

Generell kann in den Ausführungsformen der Erfindung das stabförmige Element 5 mit einem oder mehreren Halterungen mit dem Rohrabschnitt 1 verbunden sein, vorzugsweise mittels einer Halterung (nicht gezeigt), die an einem axialen Ende des stabförmigen Elements 5 angeordnet ist oder mit Halterungen, die an beiden axialen Enden angreifen.

Der Behandlungsraum erstreckt sich zumindest über den axialen Abschnitt, in dem das stabförmige Element 5 innerhalb des Rohrabschnitts 1 angeordnet ist, so dass der Behandlungsraum einen ringförmigen Querschnitt 9 aufweist, der durch den zweiten Radius des stabförmigen Elements 5 begrenzt wird, und durch den ersten Radius in diesem axialen Abschnitt, in dem die erste Elektrodenfläche 3, die zweite Elektrodenfläche 4 und der diese axial beabstandende Isolator 2 angeordnet sind, Der Behandlungsraum mit ringförmigem Querschnitt grenzt an eine Einlassöffnung 6 und eine Auslassöffnung 7, die den Querschnitt des ersten Radius in dem axialen Abschnitt der Vorrichtung aufweisen, der an gegenüberliegenden Enden des stabförmigen Elements 5 anschließen.

Da sich das elektrische Feld, das zwischen der ersten Elektrodenfläche 3 und der zweiten Elektrodenfläche 4 über den diese beabstanden Isolator 2 erzeugt wird, im Wesentlichen über den Isolator 2 erstreckt, und nur in geringem Ausmaß über die Teile der ersten und zweiten Elektrodenfläche 3, 4 anliegt, die vom Isolator 2 entfernt sind, kann das stabförmige Element 5 einen kürzeren axialen Abschnitt einnehmen, als der Abschnitt, über den sich die erste und zweite Elektrodenfläche 3, 4 erstrecken.

Zur Spannungsversorgung ist die erste Elektrodenfläche 3 und die zweite Elektrodenfläche 4 in elektrischem Kontakt mit einem Hochspannungsimpulserzeuger 10.

Wahlweise kann eine der beiden Elektrodenflächen 3, 4 oder beide Elektrodenflächen 3, 4 dadurch mit dem Hochspannungsimpulserzeuger in elektrischem Kontakt stehen, dass eine elektrische Kontaktfläche (nicht gezeigt) im Bereich des Rohrabschnitts 1 angeordnet ist, die von der ersten bzw. zweiten Elektrodenfläche 3, 4 beabstandet ist. Denn Medium 8, das den Arbeitsraum mit ringförmigem Querschnitt durchströmt, weist eine hinreichende elektrische Leitfähigkeit auf, um eine Kontaktierung auch durch eine beabstandete Kontaktfläche zu erlauben.

In der zweiten Ausführungsform der Erfindung kann die erste Elektrodenfläche 3, 11 durch einen Anteil der ersten Elektrodenfläche 3 gebildet werden, der im ersten Radius angeordnet ist, und einen zweiten Anteil 11, der im zweiten Radius angeordnet ist, und auch die zweite Elektrodenfläche durch einen ersten Anteil 4 gebildet werden kann, der im ersten Radius angeordnet ist und einen zweiten Anteil 12, der im zweiten Radius angeordnet ist. Die erste Elektrodenfläche 3, 11 ist von der zweiten Elektrodenfläche 4, 12 dadurch axial beabstandet, dass ein Isolator 2 in dem axialen Abschnitt angeordnet ist, um den die erste anteilige Elektrode 3 von der zweiten anteiligen Elektrode 4 beabstandet ist, und ein Isolator 2' in dem axialen Abschnitt angeordnet ist, um den die anteilige erste Elektrode 11 von der anteiligen zweiten Elektrode 12 im zweiten Radius beabstandet ist. Die axialen Abschnitte, über den sich der Isolator 2 im ersten Radius erstreckt, kann gleich dem Abschnitt sein, über den sich der Isolator 2' im zweiten Radius erstreckt.

Für die elektrische Kontaktierung der anteiligen ersten oder zweiten Elektrodenfläche 3, 11 bzw. 4, 12 miteinander kann vorgesehen sein, dass elektrisch leitende Verbindungsstücke 13 zwischen den anteiligen Elektrodenflächen 3 und 11 bzw. 4 und 12 angeordnet sind. Alternativ ist es möglich, die elektrische Kontaktierung zwischen den anteiligen Elektrodenflächen einer Polarität dadurch herzustellen, dass die anteiligen Elektrodenflächen voneinander beabstandet sind, beispielsweise wie vorliegend für die anteilige zweite Elektrodenfläche 4 im ersten Radius und die anteilige zweite Elektrodenfläche im zweiten Radius 12 dargestellt ist. Denn die elektrische Kontaktierung zwischen den beabstandeten Elektrodenflächen gleicher Polarität kann auch durch die Leitfähigkeit des Mediums hergestellt werden. Entsprechend kann die von der Elektrodenfläche 12 beabstandete anteilige Elektrodenfläche 4 zumindest in ihrem koaxialen Abschnitt auch als Kontaktfläche bezeichnet werden.

Wie in der Figur gezeigt ist es bevorzugt, dass in der zweiten Ausführungsform der axiale Abschnitt des Isolators 2', der sich im zweiten Radius befindet, kleiner ist als der axiale Abschnitt, über den sich der Isolator 2 im ersten Radius zwischen der ersten anteiligen Elektrodenfläche 3 und zweiten anteiligen Elektrodenfläche 4 erstreckt. In dieser Weise wird das elektrische Feld vornehmlich zwischen den anteiligen Elektrodenflächen 11, 12 hergestellt, die im zweiten Radius angeordnet sind. Entsprechend tritt auch die thermische Belastung der Vorrichtung und des Mediums im Wesentlichen in dem axialen Abschnitt der Vorrichtung auf, in dem sich der Isolator 2' im zweiten Radius axial zwischen der anteiligen ersten Elektrodenfläche 11 und der anteiligen zweiten Elektrodenfläche 12 erstreckt. Da die Vorrichtung im Bereich des zweiten Radius noch vom Rohrabschnitt 1 bis auf eine Einlassöffnung 6 und eine Auslassöffnung 7 dichtend umgeben ist, ist eine besondere Abdichtung zwischen der ersten Elektrodenfläche 11 und der zweiten Elektrodenfläche 12, die sich im zweiten Radius erstrecken, gegen den Isolator 2' nicht notwendigerweise erforderlich, der in ihrem axialen Abstand angeordnet ist.

**Bezugszeichenliste**

| | |
|---|---|
| 1 Rohrabschnitt | 7 Auslaßöffnung |
| 2, 2' Isolator | 8 Medium |
| 3, 11 erste Elektrodenfläche | 9 ringförmiger Querschnitt |
| 4, 12 zweite Elektrodenfläche | 10 Hochspannungsimpulserzeuger |
| 5 stabförmiges Element | 13 elektrisches Verbindungsstück |
| 6 Einlaßöffnung | |

## Patentansprüche

1. Vorrichtung zur Behandlung eines pumpfähigen Mediums (8) mittels Hochspannungsimpuls, die einen Behandlungsraum mit einem Querschnitt (9) aufweist, der einen ersten Radius um eine Mittellängsachse aufweist,
eine erste Elektrodenfläche (3, 11) und eine zweite Elektrodenfläche (4, 12), die von der ersten Elektrodenfläche (3, 11) axial beabstandet ist, wobei in dem axialen Abstand zwischen der ersten Elektrodenfläche (3, 11) und der zweiten Elektrodenfläche (4, 12) ein Isolator (2, 2') angeordnet ist und die erste und zweite Elektrodenfläche (3, 11, 4, 12) mit elektrischer Energie entgegengesetzter Polarität beaufschlagbar sind, wobei in dem Behandlungsraum ein stabförmiges Element (5) angeordnet ist, das den Querschnitt (9) durch seinen zweiten Radius begrenzt, wobei die erste Elektrodenfläche (3, 11) und die zweite Elektrodenfläche (4, 12) zumindest anteilig im zweiten Radius auf dem stabförmigen Element (5) angeordnet sind, **dadurch gekennzeichnet, dass** zwischen dem Anteil der ersten Elektrodenfläche (3), der im ersten Radius um die Längsmittelachse angeordnet ist, und dem Anteil (11) der ersten Elektrodenfläche (3), der im zweiten Radius um die Längsmittelachse angeordnet ist, ein elektrisch leitendes Verbindungsstück (13) fixiert ist, das den Träger für das stabförmige Element (5) und die darauf angeordnete zweite Elektrodenfläche (12) bildet, und in dem axialen Rohrabschnitt, in dem die zweite Elektrodenfläche (12) auf dem stabförmigen Element (5) angeordnet ist, eine beabstandete Kontaktfläche (4) im ersten Radius angeordnet ist und dadurch, dass der Abstand, in dem die anteilige erste Elektrodenfläche (3) von der anteiligen zweiten Elektrodenfläche (4) im ersten Radius angeordnet ist, größer ist als der Abstand der anteiligen ersten Elektrodenfläche (11) von der anteiligen zweiten Elektrodenfläche (12) im zweiten Radius.

2. Vorrichtung nach Anspruch 1, **dadurch gekennzeichnet, dass** die erste Elektrodenfläche (3, 11) und die zweite Elektrodenfläche (4, 12) jeweils umfänglich um die Längsmittelachse geschlossen sind.

3. Vorrichtung nach Anspruch 1 oder 2, **dadurch gekennzeichnet, dass** die erste Elektrodenfläche (3, 11) und die zweite Elektrodenfläche (4, 12) im gleichen ersten Radius um die Längsmittelachse angeordnet sind.

4. Vorrichtung nach Anspruch 1, **dadurch gekennzeichnet, dass** die erste und/oder die zweite Elektrodenfläche (3, 4) durch eine Leitung kontaktiert ist, die durch die Wandung des Rohrabschnitts (1) geführt ist.

5. Vorrichtung nach Anspruch 1, **dadurch gekennzeichnet, dass** in einem Abstand zur zweiten Elektrodenfläche (12) eine beabstandete elektrische Kontaktfläche im ersten Radius eines axialen Rohrabschnitts angeordnet ist, in welchem eine Elektrodenfläche (4) angeordnet ist.

6. Vorrichtung nach einem der voranstehenden Ansprüche, **dadurch gekennzeichnet, dass** der Strömungskanal von einem Rohrabschnitt (1) gebildet ist, dessen Innenradius der erste Radius ist, und einem stabförmigen Element (5), das axial in der Längsmittelachse des Rohrabschnitts (1) angeordnet ist und dessen Oberfläche den zweiten Radius um die Längsmittelachse aufweist.

7. Vorrichtung nach einem der voranstehenden Ansprüche, **dadurch gekennzeichnet, dass** sich der erste Radius abschnittsweise entlang der Längsmittelachse verändert.

8. Vorrichtung nach einem der voranstehenden Ansprüche, **dadurch gekennzeichnet, dass** sich der zweite Radius abschnittsweise über die Längsmittelachse verändert.

9. Verfahren zur Hochspannungsimpulsbehandlung pumpbarer Medien durch Bewegen eines Mediums entlang der Längsachse eines Behandlungsraums, durch Erzeugen eines elektrischen Feldes zwischen einer ersten Elektrodenfläche (3, 11) und einer von der ersten Elektrodenfläche (3, 11) axial beabstandeten zweiten Elektrodenfläche (4, 12), wobei der Behandlungsraum durch ein stabförmiges Element (5) zu einem ringförmigen Querschnitt (9) begrenzt ist und das elektrische Feld zwischen einer ersten Elektrodenfläche (3, 11) erzeugt wird, die zumindest anteilig im zweiten Radius auf dem stabförmigen Element (5) angeordnet ist, und einer zweiten Elektrodenfläche (4, 12), die zumindest anteilig im zweiten Radius auf dem stabförmigen Element (5) angeordnet ist, **gekennzeichnet durch** die Verwendung einer Vorrichtung nach einem der voranstehenden Ansprüche.

10. Verfahren nach Anspruch 9, **dadurch gekennzeichnet, dass** der Behandlungsraum mit ringförmigem Querschnitt (9) durch einen Rohrabschnitt (1) gebildet wird, der eine innere Oberfläche in einem ersten Radius um eine Längsachse aufweist, und das stabförmige Element eine Oberfläche in einem zweiten Radius um die Längsmittelachse aufweist.

## Claims

1. Device for the treatment of a pumpable medium (8) by means of a high voltage pulse having a treatment space with a cross-section (9) having a first radius about a central longitudinal axis, a first electrode surface (3, 11) and a second electrode surface (4, 12) that is axially spaced from the first electrode surface (3, 11), wherein in the axial distance between the first electrode surface (3, 11) and the second electrode surface (4, 12) an isolator (2, 2') is arranged and the first and the second electrode surfaces (3, 11,4, 12) can be subjected to electrical energy of opposite polarity, wherein in the treatment space a rod-shaped element (5) is arranged, which delimits the cross-section (9) by its second radius, wherein the first electrode surface (3, 11) and the second electrode surface (4, 12) are at least partially arranged in the second radius on the rod-shaped element (5), **characterized in that** between the portion of the first electrode surface (3) that is arranged in the first radius about the central longitudinal axis, and the portion (11) of the first electrode surface (3), which is arranged in the second radius about the central longitudinal axis, there is fixed an electrically conductive connecting piece (13), forming the carrier for the rod-shaped element (5) and the second electrode surface (12) arranged thereon, and in the axial pipe section, in which the second electrode surface (12) is arranged on the rod-shaped element (5), a spaced-apart contact surface (4) is arranged in the first radius, and **in that** the distance, in which the partial first electrode surface (3) is arranged from the partial second electrode surface (4) in the first radius, is larger than the distance of the partial first electrode surface (11) from the partial second electrode surface (12) in the second radius.

2. Device according to claim 1, **characterized in that** the first electrode surface (3, 11) and the second electrode surface (4, 12) are each circumferentially closed about the longitudinal central axis.

3. Device according to claim 1 or 2, **characterized in that** the first electrode surface (3, 11) and the second electrode surface (4, 12) are arranged in the same radius about the central longitudinal axis.

4. Device according to claim 1, **characterized in that** the first and/or the second electrode surface (3, 4) are contacted by a conductor which is arranged through the wall of the pipe section (1).

5. Device according to claim 1, **characterized in that** a spaced-apart electrical contact surface is arranged in the first radius of an axial pipe section in a distance to the second electrode surface (12), in which distance an electrode surface (4) is arranged.

6. Device according to one of the preceding claims, **characterized in that** the streaming canal is formed by a pipe section (1), the inner radius of which is the first radius, and by a rod-shaped element (5), which is arranged axially in the longitudinal central axis of the pipe section (1), the surface of which has the second radius about the central longitudinal axis.

7. Device according to one of the preceding claims, **characterized in that** the first radius changes in sections along the central longitudinal axis.

8. Device according to one of the preceding claims, **characterized in that** the second radius in sections changes along the central longitudinal axis.

9. Process for high voltage pulse treatment of pumpable media by movement of a medium along a longitudinal axis of a treatment space by generating an electrical field between a first electrode surface (3, 11) and a second electrode surface (4, 12) axially spaced from the first electrode surface (3, 11), wherein the treatment space is delimited to a ring-shaped cross-section (9) by a rod-shaped element (5) and the electrical field is generated between a first electrode surface (3, 11), which at least in portions is arranged in the second radius on the rod-shaped element (5), and a second electrode surface (4, 12), which at least in sections is arranged in the second radius on the rod-shaped element (5), **characterized by** the use of a device according to one of the preceding claims.

10. Process according to claim 9, **characterized in that** the treatment space having a ring-shaped cross-section (9) is formed by a pipe section (1), having an inner surface in a first radius about a longitudinal axis, and the rod-shaped element has a surface in a second radius about the central longitudinal axis.

## Revendications

1. Dispositif de traitement d'un fluide de pompage (8) à l'aide d'une impulsion haute tension, présentant une chambre de traitement de section transversale (9) pourvue d'un premier rayon autour d'un axe longitudinal médian, une première face d'électrode (3, 11) et une seconde face d'électrode (4, 12), qui est espacée axialement de la première face d'électrode (3, 11), tandis qu'un isolateur (2, 2') est disposé dans l'espace axial entre la première face d'électrode (3, 11) et la seconde face d'électrode (4, 12), la première face d'électrode et la seconde face d'électrode (3, 11, 4, 12) pouvant être soumises à une énergie électrique de polarité opposée, tandis que la chambre de traitement comprend un élément en forme de barre (5), qui limite la section transversale (9) par son second rayon, où la première face d'électrode (3, 11) et la seconde face d'électrode (4, 12) sont disposées au moins de manière proportionnée dans le second rayon sur l'élément en forme de barre (5), **caractérisé en ce qu'**entre la composante de la première face d'électrode (3), disposée dans le premier rayon autour de l'axe médian longitudinal, et la composante (11) de la première face d'électrode (3), disposée dans le second rayon autour de l'axe médian longitudinal, est fixé un raccord électriquement conducteur (13), formant le support pour l'élément en forme de barre (5) et la seconde face d'électrode (12) disposées sur celui-ci et **en ce que** dans la section tubulaire axiale, dans laquelle la seconde face d'électrode (12) est disposée sur l'élément en forme de barre, se trouve une surface de contact (4) à une certaine distance dans le premier rayon et **en ce que** l'intervalle dans lequel la première face d'électrode proportionnelle (3) est disposée dans le premier rayon par rapport à la second face d'électrode proportionnelle (4), est supérieur à l'intervalle dans lequel la première face d'électrode proportionnelle (11) est disposée dans le second rayon par rapport à la second face d'électrode proportionnelle (12).

2. Dispositif selon la revendication 1, **caractérisé en ce que** la première face d'électrode (3, 11) et la seconde face d'électrode (4, 12) sont respectivement fermées tout autour de l'axe médian longitudinal.

3. Dispositif selon la revendication 1 ou la revendication 2, **caractérisé en ce que** la première face d'électrode (3, 11) et la seconde face d'électrode (4, 12) sont disposées dans le même premier rayon autour de l'axe médian longitudinal.

4. Dispositif selon la revendication 1, **caractérisé en ce que** la première face d'électrode et/ou la seconde face d'électrode (3,4) sont mises en contact par un câble qui traverse la paroi de la section tubulaire (1).

5. Dispositif selon la revendication 1, **caractérisé en ce que** dans un premier intervalle par rapport à la seconde face d'électrode (12) se trouve une première face de contact électrique à une certaine distance dans le premier rayon d'une section tubulaire axiale dans laquelle une face d'électrode (4) est disposée.

6. Dispositif selon l'une des revendications précédentes, **caractérisé en ce que** le canal d'écoulement est constitué d'une section tubulaire (1), dont le rayon interne est le premier rayon, et un élément en forme de barre (5) disposé axialement dans l'axe médian longitudinal de la section tubulaire (1) et dont la surface comporte le second rayon autour de l'axe médian longitudinal.

7. Dispositif selon l'une des revendications précédentes, **caractérisé en ce que** le premier rayon est modifié par sections le long de l'axe médian longitudinal.

8. Dispositif selon l'une des revendications précédentes, **caractérisé en ce que** le second rayon est modifié par sections au-dessus de l'axe médian longitudinal.

9. Procédé de traitement par impulsions haute tension de fluides de pompage consistant à faire circuler un fluide le long de l'axe longitudinal d'une chambre de traitement, en produisant un champ électrique entre une première face d'électrode (3, 11) et une seconde face d'électrode (4, 12) espacée axialement de la première face d'électrode (3, 11), où la chambre de traitement est limitée par un élément en forme de barre (5) jusqu'à une section transversale annulaire (9) et le champ électrique est généré entre une première face d'électrode (3, 11) qui est disposée au moins de manière proportionnelle dans le second rayon sur l'élément en forme de barre (5), et une seconde face d'électrode (4, 12), qui est disposée au moins de manière proportionnelle dans le second rayon sur l'élément en forme de barre (5), **caractérisé par** l'utilisation d'un dispositif selon l'une des revendications precedents.

10. Procédé selon la revendication 9, **caractérisé en ce que** la chambre de traitement de section transversale annulaire (9) est constituée d'une section tubulaire (1), présentant une surface interne dans un premier rayon autour d'un axe longitudinal et que l'élément en forme de barre comporte une surface dans un second rayon autour de l'axe médian longitudinal.
